(19) Europäisches Patentamt
European Patent Office
Office européen des brevets

(11) Veröffentlichungsnummer: **0 173 857**
**A1**

# (12) EUROPÄISCHE PATENTANMELDUNG

(21) Anmeldenummer: 85109535.6

(22) Anmeldetag: 29.07.85

(51) Int. Cl.⁴: A 01 N 57/28
A 01 N 57/22, A 01 N 57/20
A 01 N 57/12, C 07 F 9/40
C 07 F 9/24, C 07 F 9/165
C 07 F 9/09

(30) Priorität: 10.08.84 DE 3429434

(43) Veröffentlichungstag der Anmeldung:
12.03.86 Patentblatt 86/11

(84) Benannte Vertragsstaaten:
CH DE FR GB IT LI

(71) Anmelder: BAYER AG
Konzernverwaltung RP Patentabteilung
D-5090 Leverkusen 1 Bayerwerk(DE)

(72) Erfinder: Krämer, Wolfgang, Dr.
Am Eckbusch 39/45
D-5600 Wuppertal 1(DE)

(72) Erfinder: Riebel, Hans-Jochem, Dr.
In der Beek 92
D-5600 Wuppertal 1(DE)

(72) Erfinder: Brandes, Wilhelm, Dr.
Eichendorffstrasse 3
D-5653 Leichlingen(DE)

(72) Erfinder: Hänssler, Gerd, Dr.
Heymannstrasse 40
D-5090 Leverkusen 1(DE)

## (54) Fungizide Mittel auf Phosphoryloximino-acetamid-Basis.

(57) Die Erfindung betrifft die fungizide Verwendung von teilweise bekannten Phosphoryloximino-acetamiden der Formel (I)

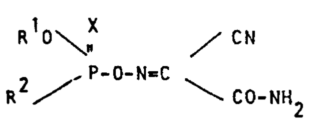

(I)

in welcher

X für Sauerstoff oder Schwefel steht,
$R^1$ für Alkyl steht und
$R^2$ für Alkyl, Alkoxy, Alkylthio, Monoalkylamino oder Phenyl steht.

EP 0 173 857 A1

BAYER AKTIENGESELLSCHAFT
Konzernverwaltung RP
Patentabteilung

5090 Leverkusen, Bayerwerk
Bas/Kü-c
II b

# Fungizide Mittel auf Phosphoryloximino-acetamid-Basis

Die vorliegende Erfindung betrifft die Verwendung von teilweise bekannten Phosphoryloximino-acetamiden als Fungizide.

Phosphoryloximino-acetamide, wie z.B. das 2-Cyano-2-(0,0-diethylphosphono-oximino)-N,N-diethylglyoxylamid und das 2-Cyano-2-(ethyl-0-ethyl-phosphinyl-oximino)-N,N-diethylglyoxylamid, und deren Verwendung als Insektizide sind bereits bekannt (vgl. US-PS 3 642 957).

Weiterhin sind 0,0-Dialkylthiophosphoryl-oximinoacetamide, die 2-Cyano-2-(0,0-dimethyl- und 0,0-diethylthionophosphono-oximino)-acetamide, und deren Verwendung als Fungizide bekannt (vgl. US-PS 3 957 847 und US-PS 3 954 992). Diese Verbindungen sind auch als Ausgangsverbindungen zur Herstellung anderer biologisch aktiver Verbindungen beschrieben (vgl. US-PS 3 919 284).

Weiterhin ist bekannt, daß bestimmte O,O-Dialkyl-(pyrazolo[1,5-a]-pyrimidin-2-yl)-thiono-phosphorsäureester, besonders der O,O-Diethyl-O-(6-ethoxycarbonyl-5-methyl-pyrazolo[1,5-a]-pyrimidin-2-yl)-thionophosphorsäureester, und bestimmte Bis-dithiocarbamate, besonders das Zinkethylen-bis-dithiocarbamat, eine fungizide Wirkung aufweisen (vergl. DE-AS 1 545 790, US-PS 2 457 674 und US-PS 3 050 439). Die Wirkung dieser Verbindungen ist jedoch insbesondere bei niedrigen Aufwandmengen und -konzentrationen nicht immer ganz befriedigend.

Es wurde gefunden, daß die teilweise bekannten Phosphoryloximino-acetamide der Formel (I)

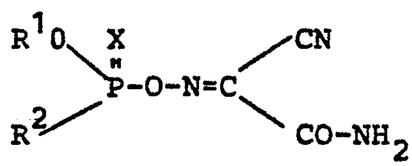

(I)

in welcher

X für Sauerstoff oder Schwefel steht,

$R^1$ für Alkyl steht und

$R^2$ für Alkyl, Alkoxy, Alkylthio, Monoalkylamino oder Phenyl steht,

ausgenommen die Verbindungen 2-Cyano-2-(0,0-dimethyl- und 0,0-diethylthionophosphoro-oximino)-acetamide, starke fungizide Eigenschaften aufweisen.

Überraschenderweise zeigen die Phosphoryloximino-acetamide der allgemeinen Formel (I) eine erheblich höhere fungizide Wirkung als die aus dem Stand der Technik bekannten Wirkstoffe 0,0-Diethyl-0-(6-ethoxycarbonyl-5-methylpyrazolo/1,5-a/-pyrimidin-2-yl)-thionophosphorsäureester und Zinkethylen-bis-dithiocarbamat, ebenso sind sie dem 2-Cyano-2-(0,0-dimethylthionophosphoro-oximino)-acetamid in verschiedenen Indikationen überlegen.

Die erfindungsgemäß zu verwendenden Phosphoryloximino-acetamide sind durch die Formel (I) genau definiert und sind teilweise bekannt (vergl. US-PS 3 642 957; US-PS 3 957 847; US-PS 3 954 992 und US-PS 3 919 284).

In der Formel (I), steht vorzugsweise

X für Sauerstoff,

$R^1$ für geradkettiges oder verzweigtes Alkyl mit 1 bis 6 Kohlenstoffatomen und

0173857

$R^2$ für geradkettiges oder verzweigtes Alkyl mit 1 bis 6 Kohlenstoffatomen; für geradkettiges oder verzweigtes Alkoxy mit 1 bis 6 Kohlenstoffatomen; für geradkettiges oder verzweigtes Alkylthio mit 1 bis 6 Kohlenstoffatomen; für geradkettiges oder verzweigtes Monoalkylamino mit 1 bis 6 Kohlenstoffatomen oder für Phenyl

oder

X für Schwefel,

$R^1$ für geradkettiges oder verzweigtes Alkyl mit 1 bis 6 Kohlenstoffatomen und

$R^2$ für geradkettiges oder verzweigtes Alkyl mit 1 bis 6 Kohlenstoffatomen; für geradkettiges oder verzweigtes Alkoxy mit 3 bis 6 Kohlenstoffatomen; für geradkettiges oder verzweigtes Alkylthio mit 1 bis 6 Kohlenstoffatomen; für geradkettiges oder verzweigtes Monoalkylamino mit 1 bis 6 Kohlenstoffatomen oder für Phenyl.

Besonders bevorzugt sind diejenigen Verbindungen der Formel (I), in denen

X für Sauerstoff steht,

$R^1$ für Methyl, Ethyl, n-Propyl, i-Propyl, n-Butyl, i-Butyl, sec.-Butyl oder tert.-Butyl steht und

$R^2$ für Methyl, Ethyl, n-Propyl, i-Propyl, n-Butyl, i-Butyl, sec.-Butyl, tert.-Butyl, Methoxy, Ethoxy, n-Propoxy, i-Propoxy, n-Butoxy, sec.-Butoxy, tert.-Butoxy, Methylthio, Ethylthio, n-Propylthio, i-Propylthio, n-Butylthio, i-Butylthio, sec.-Butylthio, tert.-Butylthio, Methylamino, Ethylamino, n-Propylamino, i-Propylamino, n-Butylamino, i-Butylamino, sec.-Butylamino, tert.-Butylamino oder Phenyl steht oder

X für Schwefel,

$R^1$ für Methyl, Ethyl, n-Propyl, i-Propyl, n-Butyl, i-Butyl, sec.-Butyl oder tert.-Butyl steht und

$R^2$ für n-Propyl, i-Propyl, n-Butyl, i-Butyl, sec.-Butyl, tert.-Butyl, Methyl, Ethyl, n-Propoxy, i-Propoxy, n-Butoxy, sec.-Butoxy, tert.-Butoxy, Methylthio, Ethylthio, n-Propylthio, i-Propylthio, n-Butylthio, i-Butylthio, sec.-Butylthio, tert.-Butylthio, Methylamino, Ethylamino, n-Propylamino, i-Propylamino, n-Butylamino, i-Butylamino, sec.-Butylamino, tert.-Butylamino oder Phenyl steht.

Einzelne der erfindungsgemäß verwendbaren Phosphoryloximino-acetamide der Formel (I) sind bekannt. Die bekannten Verbindungen können nach literaturbekannten Verfahren hergestellt werden, ebenso wie

die neuen Phosphoryloximino-acetamide der Formel (Ia)

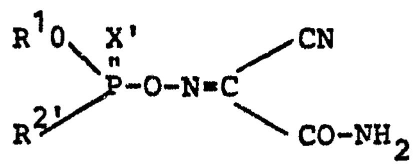

(Ia)

in welcher

$R^1$, $R^{2'}$ und X' die weiter unten angegebenen Bedeutungen haben,

indem man 2-Cyano-2-hydroximino-acetamid der Formel (II)

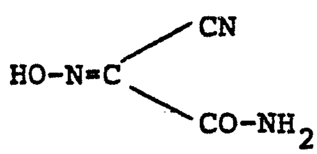

(II)

gegebenenfalls in Form der entsprechenden Alkali-, Erdalkali- oder Ammoniumsalze mit Halogen-phosphor-(phosphon)-säure-Derivaten der Formel (III)

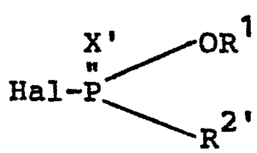

(III)

in welcher

$R^1$, $R^{2'}$ und X' die weiter unten angegebenen Bedeutungen haben und

Hal für Halogen, vorzugsweise Chlor oder Brom steht,

gegebenenfalls in Gegenwart von Verdünnungs- oder Lösungsmitteln, wie Acetonitril, und gegebenenfalls in Gegenwart von Säurebindern, wie Natrium- oder Kaliumhydroxid oder -carbonat, bei Temperaturen zwischen 10°C und 60°C umsetzt.

Die Ausgangsstoffe der Formeln (II) und (III) werden gewöhnlich in annähernd äquimolaren Mengen eingesetzt. Ein Überschuß der einen oder anderen Reaktionskomponente bringt keine wesentlichen Vorteile. Die Reaktionsprodukte isoliert man nach üblichen Methoden, wie z.B. Extraktion, Eindampfen und Andestillieren.

In der Formel (Ia) haben die Substituenten die nachfolgende Bedeutung:

X' steht für Schwefel,

$R^1$ steht für Alkyl,

$R^{2'}$ steht für Alkyl, Alkoxy mit mehr als 2 Kohlenstoffatomen, Alkylthio, Monoalkylamino oder Phenyl, außerdem steht

$X'$ für Sauerstoff, wenn

$R^{2'}$ für Alkylthio steht.

In der Formel (Ia) steht vorzugsweise

$X'$ für Schwefel,

$R^1$ für geradkettiges oder verzweigtes Alkyl mit 1 bis 6 Kohlenstoffatomen und

$R^{2'}$ für geradkettiges oder verzweigtes Alkyl mit 1 bis 6 Kohlenstoffatomen; für geradkettiges oder verzweigtes Alkoxy mit 3 bis 6 Kohlenstoffatomen; für geradkettiges oder verzweigtes Alkylthio mit 1 bis 6 Kohlenstoffatomen; für geradkettiges oder verzweigtes Monoalkylamino mit 1 bis 6 Kohlenstoffatomen oder für Phenyl, außerdem steht

$X'$ für Sauerstoff, wenn

$R^{2'}$ für geradkettiges oder verzweigtes Alkylthio mit 1 bis 6 Kohlenstoffatomen steht.

Besonders bevorzugt sind die Verbindungen der Formel (Ia), in denen

X' für Schwefel,

$R^1$ für Methyl, Ethyl, n-Propyl, i-Propyl, n-Butyl, i-Butyl, sec.-Butyl oder tert.-Butyl steht und

$R^{2'}$ für n-Propyl, i-Propyl, n-Butyl, i-Butyl, sec.-Butyl, tert.-Butyl, Methyl, Ethyl, n-Propoxy, i-Propoxy, n-Butoxy, iso-Butoxy, sec.-Butoxy, tert.-Butoxy, Methylthio, Ethylthio, n-Propylthio, i-Propyl-thio, n-Butylthio, i-Butylthio, sec.-Butylthio, tert.-Butylthio, Methylamino, Ethylamino, n-Propylamino, i-Propylamino, n-Butylamino, i-Butylamino, sec.-Butylamino, tert.-Butylamino oder Phenyl steht

außerdem

X' für Sauerstoff steht, wenn

$R^{2'}$ für Methylthio, Ethylthio, n-Propylthio, iso-Propylthio, n-Butylthio, iso-Butylthio, sec.-Butylthio oder tert.-Butylthio steht.

Das bei der Durchführung des erfindungsgemäßen Verfahrens als Ausgangsstoff benötigte 2-Cyano-2-hydroximono-acetamid der Formel (II) und die entsprechenden Natrium-, Kalium-, Calcium- oder Ammoniumsalze sind bekannt (vergl. Chem. Ber. 42, 738 (1909) und DE-OS 2 312 956).

Die weiterhin für das erfindunsgemäße Verfahren benötigten Halogen-phosphor(phosphon)-säure-Derivate sind durch die Formel (III) allgemein definiert. In dieser Formel haben $R^1$ und $R^{2'}$ die Bedeutungen, die bereits im Zusammenhang mit der Beschreibung der erfindungsgemäßen Stoffe der Formel (Ia) vorzugsweise für diese Substituenten genannt wurden. Hal steht in dieser Formel für Halogen, vorzugsweise für Chlor oder Brom.

Als Beispiele für die Verbindungen der Formel (III) seien genannt:

Methoxy-methyl-, Methoxy-ethyl-, Methoxy-n-propyl-, Methoxy-i-propyl-, Methoxy-n-butyl-, Methoxy-i-butyl-, Ethoxy-methyl-, Ethoxy-ethyl-, Ethoxy-n-propyl-, Ethoxy-i-propyl-, Ethoxy-n-butyl-, Ethoxy-i-butyl-, n-Propoxy-methyl-, n-Propoxy-ethyl-, n-Propoxy-n-propyl-, n-Propoxy-i-propyl-, n-Propoxy-n-butyl-, n-Propoxy-i-butyl-, i-Propoxy-methyl-, i-Propoxy-ethyl-, i-Propoxy-n-propyl-, i-Propoxy-i-propyl-, i-Propoxy-n-butyl-, i-Propoxy-i-butyl, n-Butoxy-methyl-, n-Butoxy-ethyl-, n-Butoxy-n-propyl-, n-Butoxy-i-propyl-, n-Butoxy-n-butyl-, n-Butoxy-i-butyl-, i-Butoxy-methyl-, i-Butoxy-ethyl-, i-Butoxy-n-propyl-, i-Butoxy-i-propyl-, i-Butoxy-n-butyl-, i-Butoxy-i-butyl-, sec.-Butoxy-methyl-, sec.-Butoxy-ethyl-, sec.-Butoxy-n-propyl-, sec.-Butoxy-i-propyl-, sec.-Butoxy-n-butyl-, sec.-Butoxy-i-butyl-, tert.-Butoxy-methyl-, tert.-Butoxy-ethyl-, tert.-Butoxy-n-propyl-, tert.-Butoxy-i-propyl-, tert.-Butoxy-n-butyl-, tert.-Butoxy-i-butyl-thionophosphonsäureesterchlorid bzw. -bromid; Dimethoxy-, Diethoxy-, Di-n-propoxy-, Di-i-propoxy-, Di-n-butoxy-, Di-i-butoxy-, Methoxy-ethoxy-, Methoxy-n-propoxy-, Methoxy-i-propoxy-, Methoxy-n-butoxy-, Methoxy-i-butoxy-, Methoxy-sec.-butoxy-, Methoxy-tert.-butoxy, Ethoxy-n-propoxy-, Ethoxy-i-propoxy, Ethoxy-n-butoxy, Ethoxy-i-butoxy-, Ethoxy-sec.-butoxy-, Ethoxy-tert.-butoxy-, n-Propoxy-i-propoxy-, n-Propoxy-n-butoxy-, n-Propoxy-i-butoxy-, n-Propoxy-sec.-butoxy-, n-Propoxy-tert.-butoxy-, i-Propoxy-n-butoxy-, i-Propoxy-i-butoxy-, n-Butoxy-i-butoxy-, n-Butoxy-sec.-butoxy-, n-Butoxy-tert.-butoxy-thionophosphorsäureesterchlorid bzw. -bromid;

Methoxy-methylthio-, Methoxy-ethylthio-, Methoxy-n-propylthio-, Methoxy-i-propylthio, Methoxy-n-butylthio-, Methoxy-i-butylthio-, Ethoxy-methylthio-, Ethoxy-ethylthio-, Ethoxy-n-propylthio-, Ethoxy-i-propylthio-, Ethoxy-n-butylthio-, Ethoxy-i-butylthio-, Ethoxy-sec.-butylthio-, n-Propoxy-methylthio-, n-Propoxy-ethylthio-, n-Propoxy-n-propylthio-, n-Propoxy-i-propylthio-, n-Propoxy-n-butylthio-, n-Propoxy-i-butylthio-, i-Propoxy-methylthio-, i-Propoxy-ethylthio-, i-Propoxy-n-propylthio-, i-Propoxy-i-propylthio-, i-Propoxy-n-butylthio-, i-Propoxy-i-butylthio-, n-Butoxy-methylthio-, n-Butoxy-ethylthio-, n-Butoxy-n-propylthio-, n-Butoxy-i-propylthio-, n-Butoxy-n-butylthio-, n-Butoxy-i-butylthio-, i-Butoxy-methylthio-, i-Butoxy-ethylthio-, i-Butoxy-n-propylthio-, i-Butoxy-i-propylthio-, i-Butoxy-n-butylthio-, i-Butoxy-i-butyl-dithio- bzw. -thio-phosphorsäureester-chlorid bzw. -bromid;

Methoxy-methylamino-, Methoxy-ethylamino-, Methoxy-n-propylamino-, Methoxy-i-propylamino-, Methoxy-n-butylamino-, Methoxy-i-butylamino-, Ethoxy-methylamino-, Ethoxy-n-propylamino, Ethoxy-i-propylamino-, Ethoxy-n-butylamino-, Ethoxy-i-butylamino-, n-Propoxy-methylamino-, n-Propoxy-ethylamino-, n-Propoxy-n-propylamino-, n-Propoxy-i-propylamino-, n-Propoxy-n-butylamino-, n-Propoxy-i-butylamino-, i-Propoxy-methylamino-, i-Propoxy-ethylamino-, i-Propoxy-n-propylamino-, i-Propoxy-i-propylamino-, i-Propoxy-n-butylamino-, i-Propoxy-i-butylamino-, n-Butoxy-methylamino-, n-Butoxy-ethylamino-, n-Butoxy-n-propylamino-, n-Butoxy-i-propylamino-, n-Butoxy-n-butylamino, n-Butoxy-i-butylamino-, i-Butoxy-methylamino-, i-Butoxy-ethylamino-, i-Butoxy-n-propylamino-, i-butoxy-i-propylamino-, i-Butoxy-n-butylamino-, i-Butoxy-i-butylamino-, sec.-Butoxy-methylamino-, sec.-Butoxy-ethylamino-, sec.-Butoxy-n-propylamino-, sec.-Butoxy-i-propylamino, sec.-Butoxy-i-butylamino-, tert.-butoxy-methylamino-, tert.-Butoxy-ethylamino-, tert.-Butoxy-n-propylamino, tert.-Butoxy-n-butylamino-thionophosphorsäureester-chlorid bzw. -bromid;

Methoxy-, Ethoxy-, n-Propoxy-, i-Propoxy-, n-Butoxy-, i-Butoxy-, sec.-Butoxy- und tert.-Butoxy-phenyl-thionophosphonsäure-chlorid bzw. -bromid.

Die Verbindungen der Formel (III) sind bekannt und/oder können nach allgemein bekannten Verfahren und Methoden hergestellt werden (vergl. z.B. Methoden der organischen Chemie (Houben-Weyl-Müller), 4. Aufl., Band 12/1 (1963), S.415-420 und S. 560-563; Band 12/2 (1964), S. 274-292, S. 405-408 und S. 607-618, S. 621-622 und S. 755-757; Thieme Verlag Stuttgart).

Die neuen Verbindungen fallen zum Teil in Form von Ölen an, die sich zum Teil nicht unzersetzt destillieren lassen, jedoch durch sogenanntes "Andestillieren", d.h. längeres Erhitzen unter vermindertem Druck auf mäßig erhöhte Temperaturen von den letzten flüchtigen Anteilen befreit und auf diese Weise gereinigt werden. Zu ihrer Charakterisierung dient der Brechungsindex und der Schmelzpunkt.

Die Wirkstoffe der Formel (I) weisen eine starke mikrobizide Wirkung auf und können zur Bekämpfung von unerwünschten Mikroorganismen praktisch eingesetzt werden. Die Wirkstoffe sind für den Gebrauch als Fungizide geeignet.

Fungizide Mittel im Pflanzenschutz werden eingesetzt zur Bekämpfung von Plasmodiophoromycetes, Oomycetes,

Chytridiomycetes, Zygomycetes, Ascomycetes, Basidiomycetes und Deuteromycetes.

Beispielhaft aber nicht begrenzend seien einige Erreger von pilzlichen Erkrankungen, die unter die oben aufgezählten Oberbegriffe fallen, genannt:

Botrytis-Arten, wie beispielsweise Botrytis cinerea;
Plasmopara-Arten, wie beispielsweise Plasmopara viticola,
Uromyces-Arten, wie beispielsweise Uromyces appendiculatus;
Sphaerotheca-Arten, wie beispielsweise Sphaerotheca fuliginea;
Venturia-Arten, wie beispielsweise Venturia inaequalis;
Podosphaera-Arten, wie beispielsweise Podosphaera leucotricha;
Phytophthora-Arten, wie beispielsweise Phytophthora infestans;
Erysiphe-Arten, wie beispielsweise Erysiphe graminis;
Puccinia-Arten, wie beispielsweise Puccinia recondita;
Fusarium-Arten, wie beispielsweise Fusarium culmorum;
Ustilago-Arten, wie beispielsweise Ustilago nuda oder avenae;
Septoria-Arten, wie beispielsweise Septoria nodorum;
Tilletia-Arten, wie beispielsweise Tilletia caries;
Pyricularia-Arten, wie beispielsweise Pyricularia oryzae;

Pellicularia-Arten, wie beispielsweise Pellicularia sasakii;
Pyrenophora-Arten, wie beispielsweise Pyrenophora teres (Konidienform: Drechslera, Syn: Helminthosporium);
Leptosphaeria-Arten, wie beispielsweise Leptosphaeria nodorum;
Cochliobolus-Arten, wie beispielsweise Cochliobolus sativus (Konidienform: Drechslera, Syn: Helminthosporium) und
Cercospora-Arten, wie beispielsweise Cercospora canescens.

Die gute Pflanzenverträglichkeit der Wirkstoffe der Formel (I) in den zur Bekämpfung von Pflanzenkrankheiten notwendigen Konzentrationen erlaubt eine Behandlung von oberirdischen Pflanzenteilen, von Pflanz- und Saatgut und des Bodens.

Als fungizide Mittel können die Wirkstoffe der Formel (I) mit gutem Erfolg zur Bekämpfung von Pflanzenkrankheiten u.a. im Reisanbau, wie beispielsweise von Pyricularia oryzae, und von Gemüsekrankheiten, bei beispielsweise Braun- und Krautfäule an Tomaten (Phytophthora infestans), eingesetzt werden.

Die Wirkstoffe können in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für

Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in den Formulierungen in Mischung mit anderen bekannten Wirkstoffen vorliegen, wie z.B. Fungizide, Insektizide, Akarizide und Herbizide, sowie in Mischungen mit Düngemitteln und Wachstumsregulatoren.

Die Wirkstoffe können als solche, in Form ihrer Formulierungen oder den daraus bereiteten Anwendungsformen, wie gebrauchsfertige Lösungen, emulgierbare Konzentrate, Emulsionen, Schäume, Suspensionen, Spritzpulver, Pasten, lösliche Pulver, Stäubemittel und Granulate, angewendet werden. Die Anwendung geschieht in üblicher Weise, z.B. durch Gießen, Verspritzen, Versprühen, Verstreuen, Verstäuben, Verschäumen, Bestreichen usw. Es ist ferner möglich, die Wirkstoffe nach dem Ultra-Low-Volume-Verfahren auszubringen oder die Wirkstoffzubereitung oder den Wirkstoff selbst in den Boden zu injizieren. Es kann auch das Saatgut der Pflanzen behandelt werden.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g, benötigt.

Bei Behandlung des Bodens sind Wirkstoffkonzentrationen von 0,00001 bis 0,1 Gew.-%, vorzugsweise von 0,0001 bis 0,02 %, am Wirkungsort erforderlich.

Verwendungsbeispiele

In den nachfolgenden Verwendungsbeispielen werden die nachstehend angegebenen Verbindungen als Vergleichsverbindungen eingesetzt.

(A) 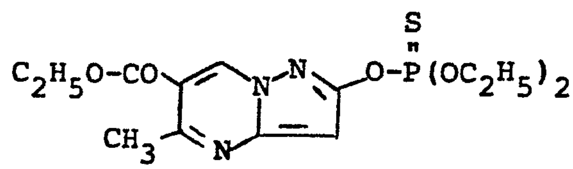

(B) 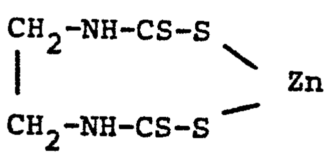

(C) 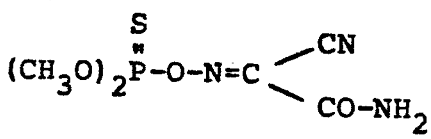

**Beispiel A**

Pyricularia-Test (Reis) / protektiv

Lösungsmittel: 12,5 Gewichtsteile Aceton
Emulgator: 0,3 Gewichtsteile Alkylarylpolyglykolether

Zur Herstellung einer zweckmäßigen Wirkstoffzubereitung vermischt man 1 Gewichtsteil Wirkstoff mit der angegebenen Menge Lösungsmittel und verdünnt das Konzentrat mit Wasser und der angegebenen Menge Emulgator auf die gewünschte Konzentration.

Zur Prüfung auf protektive Wirksamkeit bespritzt man junge Reispflanzen mit der Wirkstoffzubereitung bis zur Tropfnässe. Nach dem Abtrocknen des Spritzbelages werden die Pflanzen mit einer wäßrigen Sporensuspension von Pyricularia oryzae inokuliert. Anschließend werden die Pflanzen in einem Gewächshaus bei 100 % rel. Luftfeuchtigkeit und 25°C aufgestellt.

4 Tage nach der Inokulation erfolgt die Auswertung des Krankheitsbefalls.

Eine deutliche Überlegenheit in der Wirksamkeit gegenüber dem Stand der Technik zeigen in diesem Test z.B. die Verbindungen gemäß den Herstellungsbeispielen: (6), (3), (4) und (1).

## Tabelle A

Pyricularia-Test (Reis) / protektiv

| Wirkstoffe | Wirkstoffkonzentration in % | Krankheitsbefall in % der unbehandelten Kontrolle |
|---|---|---|
| 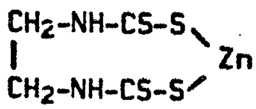 (Bekannt) (B) | 0,025 | 75 |
| 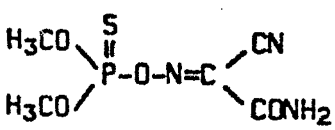 (Bekannt) (C) | 0,025 | 50 |
| 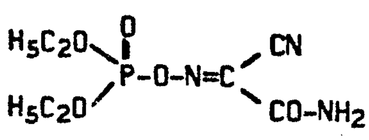 (6) | 0,025 | 30 |
| 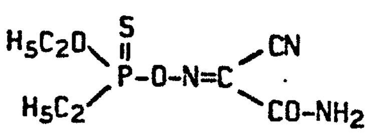 (1) | 0,025 | 30 |
| 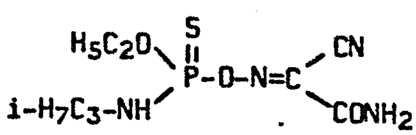 (3) | 0,025 | 30 |

**Tabelle A** (Fortsetzung)

Pyricularia-Test (Reis) / protektiv

| Wirkstoffe | Wirkstoffkonzentration in % | Krankheitsbefall in % der unbehandelten Kontrolle |
|---|---|---|
| 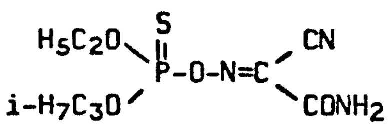 (4) | 0,025 | 30 |

Beispiel B

Pyricularia-Test (Reis) / systemisch

Lösungsmittel: 12,5 Gewichtsteile Aceton
Emulgator: 0,3 Gewichtsteile Alkylarylpolyglykolether

Zur Herstellung einer zweckmäßigen Wirkstoffzubereitung vermischt man 1 Gewichtsteil Wirkstoff mit der angegebenen Menge Lösungsmittel und verdünnt das Konzentrat mit Wasser und der angegebenen Menge Emulgator auf die gewünschte Konzentration.

Zur Prüfung auf systemische Eigenschaften werden 40 ml der Wirkstoffzubereitung auf Einheitserde gegossen, in der junge Reispflanzen angezogen wurden. 7 Tage nach der Behandlung werden die Pflanzen mit einer wäßrigen Sporensuspension von Pyricularia oryzae inokuliert. Danach verbleiben die Pflanzen in einem Gewächshaus bei einer Temperatur von 25°C und einer rel. Luftfeuchtigkeit von 100 % bis zur Auswertung.

4 Tage nach der Inokulation erfolgt die Auswertung des Krankheitsbefalls.

Eine deutliche Überlegenheit in der Wirksamkeit gegenüber dem Stand der Technik zeigen in diesem Test z.B. die Verbindungen gemäß den Herstellungsbeispielen: (6), (3), (5), (4) und (1).

## Tabelle B

Pyricularia-Test (Reis) / systemisch

| Wirkstoffe | Aufwandmenge in mg Wirkstoff pro 100 $cm^2$ | Krankheitsbefall in % der unbehandelten Kontrolle |
|---|---|---|
| 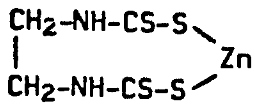 (Bekannt) (B) | 100 | 100 |
| 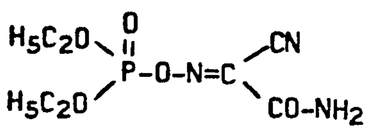 (6) | 100 | 22 |
| 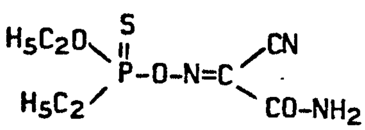 (1) | 100 | 55 |
| 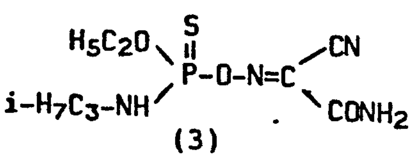 (3) | 100 | 55 |

Tabelle B (Fortsetzung)

Pyricularia-Test (Reis) / systemisch

| Wirkstoffe | Aufwandmenge in mg Wirkstoff pro 100 $cm^2$ | Krankheitsbefall in % der unbehandelten Kontrolle |
|---|---|---|
| 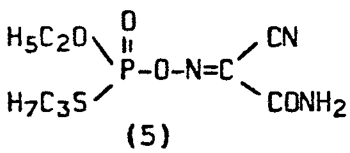 (5) | 100 | 33 |
| 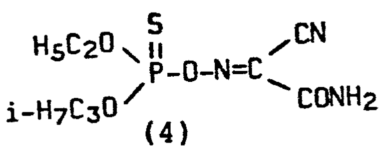 (4) | 100 | 33 |

Beispiel C

Phytophthora-Test (Tomate) / protektiv

Lösungsmittel: 4,7 Gewichtsteile Aceton
Emulgator: 0,3 Gewichtsteile Alkyl-aryl-polyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit bespritzt man junge Pflanzen mit der Wirkstoffzubereitung bis zur Tropfnässe. Nach Antrocknen des Spritzbelages werden die Pflanzen mit einer wäßrigen Sporensuspension von Phytophthora infestans inokuliert.

Die Pflanzen werden in einer Inkubationskabine mit 100 % relativer Luftfeuchtigkeit und ca. 20°C aufgestellt.

3 Tage nach der Inokulation erfolgt die Auswertung.

Eine deutliche Überlegenheit in der Wirksamkeit gegenüber dem Stand der Technik zeigen in diesem Test z.B. die Verbindungen gemäß den Herstellungsbeispielen: (2), (1), (6), (3), (5) und (4).

## T a b e l l e  C

Phytophthora-Test (Tomate) / protektiv

| Wirkstoff | Befall in % bei einer Wirkstoffkonzentration von 50 ppm |
| --- | --- |
| 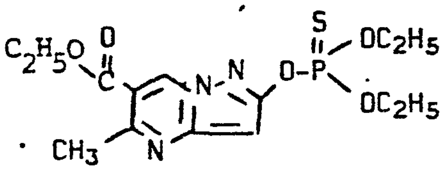 (Bekannt) (A) | 45 |
| 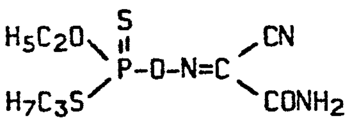 (2) | 21 |
| 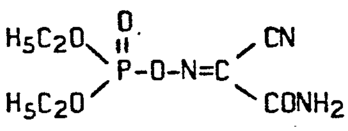 (6) | 13 |
| 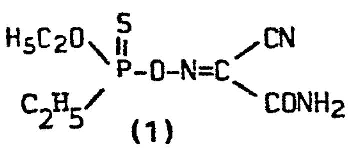 (1) | 13 |

**Tabelle C** (Fortsetzung)

Phytophthora-Test (Tomate) / protektiv

| Wirkstoff | Befall in % bei einer Wirkstoffkonzentration von 50 ppm |
|---|---|
| 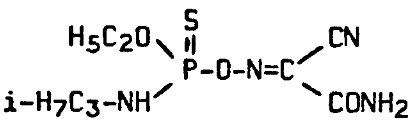 (3) | 20 |
| 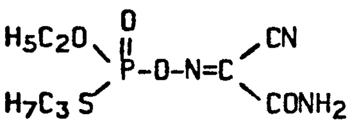 (5) | 26 |
| 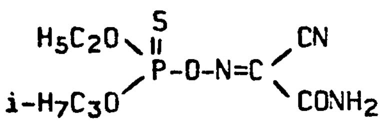 (4) | 14 |

## Herstellungsbeispiele

### Beispiel 1

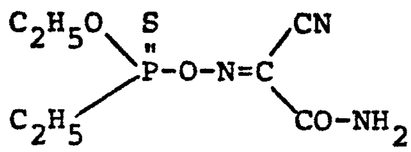

Eine Suspension von 6,8 g (0,05 Mol) des Natriumsalzes von 2-Cyano-2-hydroximino-acetamid und 8,6 g (0,05 Mol) O-Ethyl-ethan-thionophosphonsäureesterchlorid in 100 ml Acetonitril wird 15 Stunden bei 25°C gerührt. Anschließend wird das Reaktionsgemisch mit 200 ml Wasser versetzt und zweimal mit je 100 ml Toluol extrahiert. Die vereinigten organischen Phasen werden mit 100 ml Wasser gewaschen, über Natriumsulfat getrocknet, eingedampft und andestilliert.

Man erhält 7,5 g (60 % der Theorie) 2-Cyano-2-(O-ethyl-ethan-thiophosphino-oximino)-acetamid in Form farbloser Kristalle vom Schmelzpunkt 85°C.

Analog Beispiel 1 werden die nachfolgenden Verbindungen der Formel (I) hergestellt:

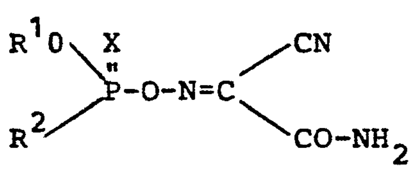

(I)

| Beispiel Nr. | $R^1$ | $R^2$ | X | Physikal. Konstante |
|---|---|---|---|---|
| 2 | $-C_2H_5$ | $-SC_3H_7$ | S | Fp: 68°C |
| 3 | $-C_2H_5$ | $-NH-C_3H_7-i$ | S | Öl (teil-kristallin) |
| 4 | $-C_2H_5$ | $-OC_3H_7-i$ | S | Fp: 106°C |
| 5 | $-C_2H_5$ | $-SC_3H_7$ | O | Öl (teil-kristallin) |
| 6 | $-C_2H_5$ | $-OC_2H_5$ | O | $n_D^{22}$: 1.4720 |

Patentansprüche

1. Fungizide Mittel, gekennzeichnet durch einen Gehalt an mindestens einem Phosphoryl-oximino-acetamid der Formel (I)

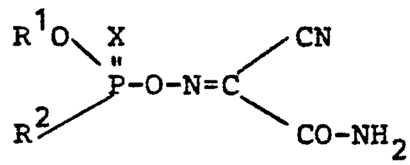

(I)

in welcher

X für Sauerstoff oder Schwefel steht,

$R^1$ für Alkyl steht und

$R^2$ für Alkyl, Alkoxy, Alkylthio, Monoalkylamino oder Phenyl steht, ausgenommen die Verbindungen 2-Cyano-2-(0,0-dimethyl- und 0,0-diethyl-thionophosphono-oximino)-acetamid.

2. Fungizide Mittel gemäß Anspruch 1, wobei

X für Sauerstoff steht,

$R^1$ für geradkettiges oder verzweigtes Alkyl mit 1 bis 6 Kohlenstoffatomen steht und

$R^2$ für geradkettiges oder verzweigtes Alkyl mit 1 bis 6 Kohlenstoffatomen; für geradkettiges oder verzweigtes Alkoxy mit 1 bis 6 Kohlenstoffatomen; für geradkettiges oder verzweigtes Alkylthio mit 1 bis 6 Kohlenstoffatomen; für geradkettiges oder verzweigtes Monoalkylamino mit 1 bis 6 Kohlenstoffatomen oder für Phenyl steht

oder

X für Schwefel steht,

$R^1$ für geradkettiges oder verzweigtes Alkyl mit 1 bis 6 Kohlenstoffatomen steht und

$R^2$ für geradkettiges oder verzweigtes Alkyl mit 1 bis 6 Kohlenstoffatomen; für geradkettiges oder verzweigtes Alkoxy mit 3 bis 6 Kohlenstoffatomen; für geradkettiges oder verzweigtes Alkylthio mit 1 bis 6 Kohlenstoffatomen; für geradkettiges oder verzweigtes Monoalkylamino mit 1 bis 6 Kohlenstoffatomen oder für Phenyl steht.

3. Fungizide Mittel gemäß Anspruch 1, wobei

X für Sauerstoff steht,

$R^1$ für Methyl, Ethyl, n-Propyl, i-Propyl, n-Butyl, i-Butyl, sec.-Butyl oder tert.-Butyl steht und

$R^2$ für Methyl, Ethyl, n-Propyl, i-Propyl, n-Butyl, i-Butyl, sec.-Butyl, tert.-Butyl, Methoxy, Ethoxy, n-Propoxy, i-Propoxy, n-Butoxy, sec.-Butoxy, tert.-Butoxy, Methylthio, Ethylthio, n-Propylthio, i-Propylthio, n-Butylthio, i-Butylthio, sec.-Butylthio, tert.-Butylthio, Methylamino, Ethylamino, n-Propylamino, i-Propylamino, n-Butylamino, i-Butylamino, sec.-Butylamino, tert.-Butylamino oder Phenyl steht oder

X für Schwefel steht,

$R^1$ für Methyl, Ethyl, n-Propyl, i-Propyl, n-Butyl, i-Butyl, sec.-Butyl oder tert.-Butyl steht und

$R^2$ für n-Propyl, i-Propyl, n-Butyl, i-Butyl, sec.-Butyl, tert.-Butyl, Methyl, Ethyl, n-Propoxy, i-Propoxy, n-Butoxy, sec.-Butoxy, tert.-Butoxy, Methylthio, Ethylthio, n-Propylthio, i-Propylthio, n-Butylthio, i-Butylthio, sec.-Butylthio, tert.-Butylthio, Methylamino, Ethylamino, n-Propylamino, i-Propylamino, n-Butylamino, i-Butylamino, sec.-Butylamino, tert.-Butylamino oder Phenyl steht.

0173857

4. Verfahren zur Bekämpfung von Pilzen, dadurch gekennzeichnet, daß man Phosphoryloximino-acetamide der Formel (I) gemäß Anspruch 1 auf Pilze und/oder ihren Lebensraum einwirken läßt.

5. Verwendung von Phosphoryloximino-acetamiden gemäß Formel (I) gemäß Anspruch 1 zur Bekämpfung von Pilzen.

6. Verfahren zur Herstellung von fungiziden Mitteln, dadurch gekennzeichnet, daß man Phosphoryloximino-acetamide gemäß Formel (I) gemäß Anspruch 1 mit Streckmitteln und/oder oberflächenaktiven Mitteln vermischt.

7. Phosphoryloximino-acetamide der Formel (Ia)

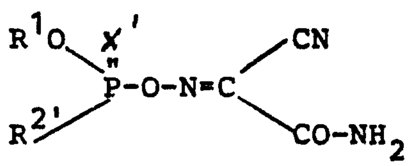

(Ia)

in welcher

X' für Schwefel steht,

$R^1$ für Alkyl steht,

$R^{2'}$ für Alkyl, Alkoxy mit mehr als 2 Kohlenstoffatomen, Alkylthio, Monoalkylamino oder Phenyl steht, außerdem

X' für Sauerstoff steht, wenn

$R^{2'}$ für Alkylthio steht.

8. Phosphoryloximino-acetamide gemäß Formel (Ia) gemäß Anspruch 7, wobei

X' für Schwefel,

$R^1$ für geradkettiges oder verzweigtes Alkyl mit 1 bis 6 Kohlenstoffatomen und

$R^{2'}$ für geradkettiges oder verzweigtes Alkyl mit 1 bis 6 Kohlenstoffatomen; für geradkettiges oder verzweigtes Alkoxy mit 3 bis 6 Kohlenstoffatomen; für geradkettiges oder verzweigtes Alkylthio mit 1 bis 6 Kohlenstoffatomen; für geradkettiges oder verzweigtes Monoalkylamino mit 1 bis 6 Kohlenstoffatomen oder für Phenyl steht, außerdem

X' für Sauerstoff steht, wenn

$R^{2'}$ für geradkettiges oder verzweigtes Alkylthio mit 1 bis 6 Kohlenstoffatomen steht.

9. Phosphoryloximino-acetamide gemäß Formel (Ia) gemäß Anspruch 7, wobei

$X'$ für Schwefel,

$R^1$ für Methyl, Ethyl, n-Propyl, i-Propyl, n-Butyl, i-Butyl, sec.-Butyl oder tert.-Butyl steht und

$R^{2'}$ für n-Propyl, i-Propyl, n-Butyl, i-Butyl, sec.-Butyl, tert.-Butyl, Methyl, Ethyl, n-Propoxy, i-Propoxy, n-Butoxy, i-Butoxy, sec.-Butoxy, tert.-Butoxy, Methylthio, Ethylthio, n-Propylthio, i-Propylthio, n-Butylthio, i-Butylthio, sec.-Butylthio, tert.-Butylthio, Methylamino, Ethylamino, n-Propylamino, i-Propylamino, n-Butylamino, i-Butylamino, sec.-Butylamino, tert.-Butylamino oder Phenyl steht, außerdem

$X'$ für Sauerstoff steht, wenn

$R^{2'}$ für Methylthio, Ethylthio, n-Propylthio, i-Propylthio, n-Butylthio, sec.-Butylthio, iso-Butylthio oder tert.-Butylthio steht.

0173857

10. Verfahren zur Herstellung von Phosphoryloximino-acetamiden der Formel (Ia)

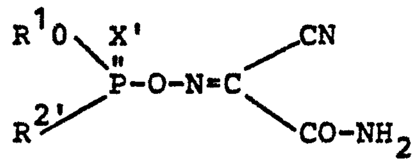

(Ia)

in welcher

X' für Schwefel steht,

$R^1$ für Alkyl steht und

$R^{2'}$ für Alkyl, Alkoxy mit mehr als 2 Kohlenstoffatomen, Alkylthio, Monoalkylamino oder Phenyl steht, außerdem

X' für Sauerstoff steht, wenn

$R^{2'}$ für Alkylthio steht,

dadurch gekennzeichnet, daß man 2-Cyano-2-hydroximino-acetamid der Formel (II)

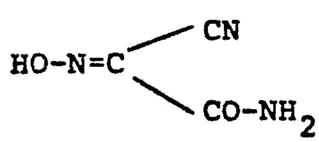

(II)

gegebenenfalls in Form der entsprechenden Alkali-, Erdalkali- oder Ammoniumsalze mit Halogen-phosphor-(phosphon)-säure-Derivaten der Formel (III)

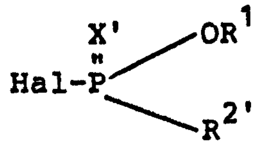

(III)

in welcher

$R^1$, $R^{2'}$ und X' die oben angegebenen Bedeutungen haben und

Hal für Halogen steht,

gegebenenfalls in Gegenwart von Verdünnungs- oder Lösungsmitteln, und gegebenenfalls in Gegenwart von Säurebindern bei Temperaturen zwischen 10°C und 60°C umsetzt.

Europäisches Patentamt

**EUROPÄISCHER RECHERCHENBERICHT**

0173857
Nummer der Anmeldung

EP 85 10 9535

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | CH-A- 349 973 (CALIFORNIA SPRAY-CHEMICAL CORPORATION)<br>* Seite 1, Zeile 18 - Seite 2, Zeile 15; Patentansprüche *<br>--- | 10 | A 01 N 57/28<br>A 01 N 57/22<br>A 01 N 57/20<br>A 01 N 57/12<br>C 07 F 9/40<br>C 07 F 9/24<br>C 07 F 9/165<br>C 07 F 9/09 |
| D,Y | US-A-3 954 992 (S.H. DAVIDSON)<br>* Spalte 6, Zeilen 16-62; Spalte 8, Zeilen 6-9,16-18; Spalte 13, Zeilen 11-52 * | 10 | |
| D,A | | 1-9 | |
| | --- | | |
| D,A | US-A-3 642 957 (J. BILLET)<br>* Insgesamt *<br>----- | 1-6,10 | |
| | | | RECHERCHIERTE SACHGEBIETE (Int. Cl.4) |
| | | | A 01 N<br>C 07 F |

Der vorliegende Recherchenbericht wurde für alle Patentansprüche erstellt.

| Recherchenort | Abschlußdatum der Recherche | Prüfer |
|---|---|---|
| DEN HAAG | 26-11-1985 | FLETCHER A.S. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82